(19) Europäisches Patentamt / European Patent Office / Office européen des brevets

(11) **EP 2 903 225 B1**

(12) **EUROPEAN PATENT SPECIFICATION**

(45) Date of publication and mention
of the grant of the patent:
**28.09.2016 Bulletin 2016/39**

(51) Int Cl.:
*H04L 12/815* *(2013.01)*     *H04L 29/06* *(2006.01)*
*H04W 28/02* *(2009.01)*

(21) Application number: **14305138.1**

(22) Date of filing: **30.01.2014**

(54) **Bit-rate control for access to content stored in local delivery devices of a content-delivery network**

Bitratensteuerung zum Zugriff auf in lokalen Auslieferungsvorrichtungen eines Inhaltsauslieferungsnetzwerks gespeicherten Inhalt

Commande de débit binaire pour accéder à un contenu stocké dans des dispositifs d'administration locale d'un réseau de livraison de contenu

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.08.2015 Bulletin 2015/32**

(73) Proprietor: **ALCATEL LUCENT**
**92100 Boulogne-Billancourt (FR)**

(72) Inventors:
• **El Mghazli, Yacine**
 **91620 Nozay (FR)**
• **Mongazon-Cazavet, Bruno**
 **91620 Nozay (FR)**

(74) Representative: **El Manouni, Josiane**
 **Alcatel-Lucent International**
 **148/152 route de la Reine**
 **92100 Boulogne Billancourt (FR)**

(56) References cited:
**WO-A1-02/063837**     **US-A1- 2013 114 408**
**US-A1- 2013 144 979**     **US-A1- 2013 219 005**
**US-A1- 2013 246 564**

**Description**

FIELD OF THE INVENTION

The invention relates to the domain of content delivery networks (CDN) and more specifically to the access to contents stored in delivery appliances (DA) of such a network and to the control of the downstream bit-rate towards user equipments (UE).

BACKGROUND OF THE INVENTION

An important use of a telecommunication network consists in accessing data stored in data centers. Examples of such data centers are the web (WWW), video or audio streaming servers, applications downloading servers, web objects, media files repository servers, etc.

Content delivery network have been defined in order to avoid that the various content servers become bottleneck in the network traffic.

A content delivery network (CDN) or content distribution network is a system of memory caches containing copies of data placed at various points in a network so as to maximize bandwidth for access to the data from clients (i.e. user's equipments, UE) throughout the network.

Thanks to the content delivery network, clients access a copy of the required data located near to their communication equipments, while without such a CDN all clients of a network would access to the same central content server.

In general, CDN architectures comprise

- Delivery nodes (or delivery appliances, DA) for delivering contents to the clients. It contains cache memory and applications for managing the memory and content requests.
- Storage nodes, for providing data to cache memories the delivery nodes
- Origin nodes, which are master source for the contents. They are usually deployed within an operator's network or, more usually, within a content owner's infrastructure.
- Service node (or control nodes) can host applications of management, routing and monitoring of the different elements of the content delivery network. Typically, it defines the integration point into any OSS/BSS system and network operation center.

As previously stated, the required content is delivered to the user from a delivery node near to it.

In this context, the word "near" refers to a distance in the IP topology of a communication network. The role of the Content Delivery Network (CDN) is to take this notion of IP distance into account so as to decide the appropriate Delivery Appliance where to route the user's request. Optionally, the CDN may also take into account other criteria, like for instance latency or network load.

Such a model for CDN works well for the fixed or wireline communication networks (wherein the IP addresses reflect the actual network topology), but rises problems in the context of mobile or cellular networks.

Indeed, the packet core of a cellular network (for instance, of a LTE type) is designed in a centralized way so that all traffic is tunneled through a single PDN (Public Data Network) gateway (or PGW). In other words, all wireless communication equipments (UE) are one IP hop away from the PGW. Consequently the CDN is not anymore able to determine the delivery node which is the nearest to the requesting wireless equipment: its IP address cannot serve as a criterion to determine a distance within a LTE or similar network.

In addition, this does not allow placing the delivery nodes (or appliances) lower in the LTE network than on the SGI interface, which means next to the PGW (PDN gateway). However, the LTE network encounters the same problematic than the wireline network and would benefit of placing delivery appliances lower in the LTE network in order to offload the network backbone.

Some known solution of the art consists in providing cellular network with dedicated local PGW "near" the (LTE) cells, in order to allow each user to access to the closest delivery node located behind a local PGW. These solutions intend keeping unchanged the principle of tunneling between the UE and the PGW, to avoid major impact on the design of the network.

However, these solutions impact upper layers of the wireless communication equipments, UE, which then becomes responsible of dealing with the different local PGWs via a kind of connection manager. So, the US must not only deal with several LTE interfaces but also manage the CDN signaling, which adds complexity on it, whenever it is even possible.

Document US 2013/144979 A1 describes a communications network that implements an intelligent video delivery scheme.

## SUMMARY OF THE INVENTION

The object of the present invention is to alleviate at least partly the above mentioned drawbacks. More particularly, the invention aims to allow installation of delivery nodes near the cells of a cellular network, in order to offload its backbone.

In addition, the present invention aims to manage the maximum bit rate allowed for a given access point name (APN) on the downlink, for both the traffic coming from the closest delivery nodes and for the traffic coming for other content sources within the cellular network.

This object is achieved with a method for allowing a user equipment connected to a base station of a mobile communication network to access contents stored into delivery nodes of a content delivery network, comprising the steps of:

having said user equipment sending a request (M) for content to said base station (BS);

- having said base station forwarding said request into a tunnel;
- having a gateway intercepting said request inside said tunnel and forwarding it to a nearest delivery node of said base station ;
- having said delivery node transmitting said content to said gateway as a dataflow,
- having said gateway re-introducing said dataflow into said tunnel and forwarding said dataflow to said user equipment through said tunnel,
- further comprising a step of having said gateway determining a maximum bit rate, APN-AMBR, for said dataflow to be transmitted through said tunnel to said user equipment.

Preferred embodiments comprise one or more of the following features, which can be taken separately or together, either in partial combination or in full combination:

- said request contains a first IP address and wherein said gateway modifies said request by replacing said first IP address by a second IP address associated with said delivery node within a destination field.
- said gateway modifies said dataflow by replacing said second IP address by said first IP address within a source field.
- said gateway determines said delivery node within a list of delivery nodes to which it is associated, according to a distance criterion.
- said gateway further determines a central maximum bit rate, APN-AMBR, for traffic incoming through said tunnel.
- said gateway receives an overall maximum bit rate, session-APN-AMBR, and wherein said central maximum bit rate is determined so as

as

$$\text{session-APN-AMBR} = \text{APN-AMBR} + \text{CDN-APN-AMBR}.$$

- said gateway is a signaling gateway of said content delivery network.

Another aspect of the invention concerns a computer program product comprising a set of instructions arranged, when executed by processing means, for performing the method as previously described.

Another aspect of the invention concerns a gateway for allowing a user equipment connected to a base station of a mobile communication network to access contents stored into delivery nodes of a content delivery network, adapted for:

- receiving a request for content from said user equipment, forwarded by said base station into a tunnel;
- intercepting said request inside said tunnel and forwarding it to a nearest delivery node of said base station;
- receiving from said delivery node said content as a dataflow,
- re-introducing said dataflow into said tunnel and forwarding said dataflow to said user equipment through said tunnel,
- said gateway being further adapted to determine a maximum bit rate, CDN-APN-AMBR, for said dataflow to be transmitted to said user equipment.

Preferred embodiments comprise one or more of the following features, which can be taken separately or together, either in partial combination or in full combination:

- said request contains a first IP address and wherein said gateway is adapted to modify said request by replacing said first IP address by a second IP address associated with said delivery node within a destination field;

- said gateway is adapted to modify said dataflow by replacing said second IP address by said first IP address within a source field.
- said gateway is adapted to determine said delivery node within a list of delivery nodes to which it is associated, according to a distance criterion.
- said gateway is further adapted to determine a central maximum bit rate, APN-AMBR, for traffic incoming through said tunnel;
- Said gateway is further adapted to receive an overall maximum bit rate, session-APN-AMBR, and said central maximum bit rate is determined so as

determined so as

$$session\text{-}APN\text{-}AMBR = APN\text{-}AMBR + CDN\text{-}APN\text{-}AMBR.$$

Another aspect of the invention concerns a content delivery network comprising at least one gateway as previously described.

Further features and advantages of the invention will appear from the following description of embodiments of the invention, given as non-limiting examples, with reference to the accompanying drawings listed hereunder.

BRIEF DESCRIPTION OF THE DRAWINGS

Fig. 1 shows an example of deployment of the invention within a cellular network.
Fig. 2 shows a flowchart illustrating protocol exchanges between elements of a communication network, according to an embodiment of the invention.

DETAILED DESCRIPTION OF THE INVENTION

The invention applies in particular to the context of mobile communication network, and more specifically to the LTE (Long Term Evolution) type of mobile communication network, that is used by a mobile network operator (MNO). But it can also apply to other types of communication network, including networks defined by the 3GPP standardization body, like the UMTS (Universal Mobile Telecommunication System).

Similarly, the user equipment UE can for instance be a wireless communication device like a smartphone. But it can be any type of communication equipment able to connect to the communication network as defined above. For instance, it can be a tablet, a laptop computer, a set-top box, etc.

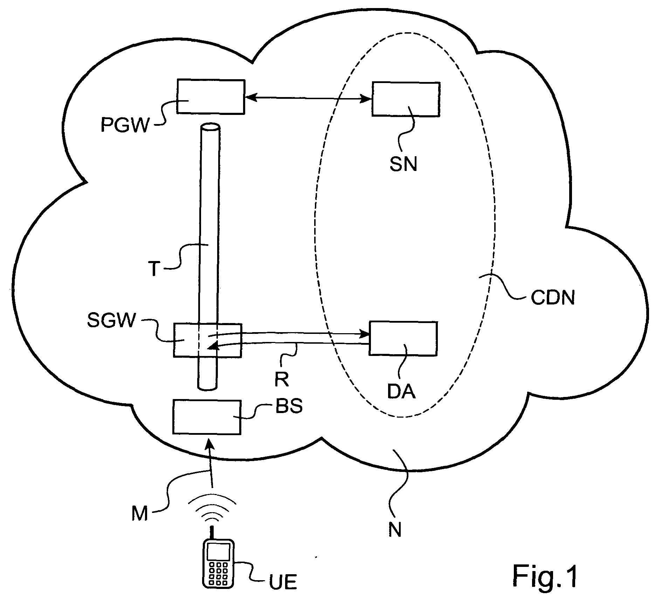

In the example depicted on FIG. 1, the user equipment UE is connected to a base station BS of the mobile communication network N. This base station BS can be a Node B and be associated to a cell, to which the user equipment UE beholds at a given time.

The user equipment UE sends a request M for content of a content delivery network CDN. This request M is built with, as destination address, the IP address of a service node SN. In general, the user equipment UE does not know the service node SN to which it must send its requests, as many may exist through a communication network N. So, in some embodiments of the invention, and as known in the art, the user equipment UE first queries a content management system (CMS), not depicted on FIG. 1, which replies by providing the address of the service node SN corresponding to the location of the user equipment UE.

This request M is transmitted to the base station BS.

The base station BS forwards this request M into a tunnel T. This tunnel T is established into the cellular communication network N, according to well-known embodiments for a content delivery network. The tunnel T connects the base station BS to a public data network gateway PGW.

The mobile communication network further comprises a gateway SGW. In a LTE network, such a gateway can be a Signaling gateway, while, in a UMTS network, it can be a SGSN (Serving GPRS Support Node) or a RNC (Radio Network Controller). The gateway can be assigned to a cell and to a base station; but more generally a gateway is assigned to a wider region, encompassing several cells.

This gateway SGW comprises appropriate means for intercepting the traffic inside the tunnel T. More precisely, it is adapted to intercept requests M towards the public data network gateway PGW, dedicated to the content delivery network CDN, and to forward them to a delivery node DA.

The gateway SGW is adapted to maintain a set of delivery nodes (possibly one only), and according to the content of the request R, one delivery node among this set will be selected. In general, the selected delivery node DA is the nearest delivery node DA of the base station BS, but other selecting schemes may be deployed as well. For instance, some load balancing mechanisms can also be deployed, etc.

The "rerouting" of the request M can be performed in several ways.

According to an embodiment of the invention, the request M contains a first IP address within a destination field, which may correspond to a service node SN of the content delivery network CDN.

The gateway SGW then modifies the request by replacing this first IP address by a second IP address associated with the selected delivery node DA within this destination field.

Such IP address replacement can be performed by a NAT ("Network Address Translation") mechanism, for example.

According to another embodiment of the invention, no modification is needed. If the cellular network is a private network, the same IP address can be allocated to all the local delivery nodes and no IP address replacement is needed.

Before being actually received by the delivery node DA, the (potentially modified) request M may be transmitted through a shadow PGW (Sh-PGW), which has similar functions and roles than the public gateway PGW regarding the service node SN.

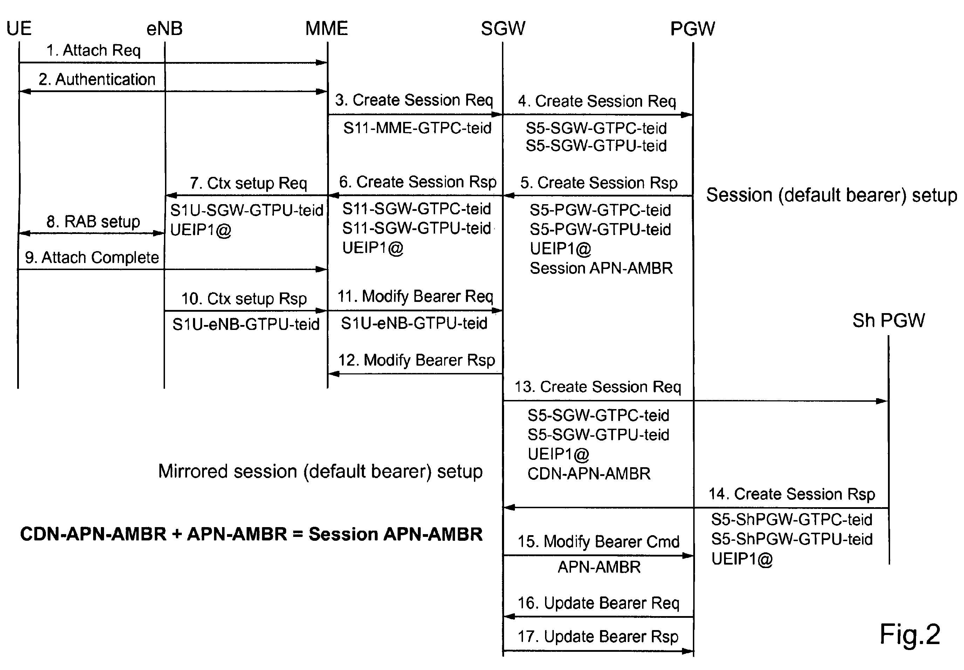

In a non-limiting embodiment, as depicted on FIG. 1, the gateways SGW and Sh-PGW are collocated within a same functional device. Accordingly, on the flowchart depicted on FIG. 2, they are represented as two different entities (2 different functional roles), whereas they are both represented by a single functional "box" (or device) on FIG. 1.

The traffic between the delivery node and the two gateways is considered as "local".

The delivery node DA can then transmit the requested content to the gateway by a dataflow R. This dataflow can be made of a single message (IP datagram...) or a flow of several messages. In case the content is a video, or a large multimedia file, the dataflow may comprise a huge number of subsequent messages.

The dataflow is re-introduced in the tunnel T.

For doing this, according to the embodiment described above, the dataflow may be modified by replacing the second IP address by the first IP address within a source field.

The gateway SGW is furthermore in charge of determining a downstream bit-rate for the transmission towards the user equipment, and to apply this limit to the transmitted dataflow. The gateway SGW controls the downstream bit-rate for the access to the local delivery device DA from a user equipment UE. In other words, the gateway forwards the dataflow to the user equipment, through the tunnel T, according to a maximum bit rate, APN-AMBR.

Typically, the gateway SGW receives an overall maximum bit rate, session-APN-AMBR, from the public data network gateway PGW during a session setup phase.

This session setup phase is illustrated on FIG. 2, showing example protocol exchanges between the User Equipment UE, the base station (here, a Node B, eNB), a memory management entity, MME, and the public data network gateway PGW.

These exchanges form a standardized procedure, during which the overall maximum bit rate, session-APN-AMBR, is transmitted by the message number 5, "Create Session Rsp".

Some other embodiments are of course possible, notably in case of deployment under other network technologies and standards.

This overall maximum bit rate, session-APN-AMBR, can serve as a basis for the gateway SGW to determine the maximum bit rate, CDN-APN-AMBR, to be applied to limit the transmission of the dataflow R. However, some other embodiments may be applicable also.

In particular, the gateway SGW may allocate to this local traffic a portion of the overall maximum bit rate, so that:

portion of the overall maximum bit rate, so that:

$$CDN\text{-}APN\text{-}AMBR < session\text{-}APN\text{-}AMBR$$

This local traffic is the transmitted dataflow R emitted by the delivery device DA to the user equipment UE.

However, in addition of the local traffic, some other traffic may also be transmitted through the tunnel T. This other traffic may correspond to other content delivery network(s), or to non-CDN traffic.

In order to prevent receiving a too important flow corresponding to this other traffic, the gateway SGW may also determine a central maximum bit rate, APN-AMBR, for traffic incoming through the tunnel T. This central maximum bit rate, APN-AMBR, may be provided to the public data network gateway PGW.

This central maximum bit rate can be determined so as

$$session\text{-}APN\text{-}AMBR = APN\text{-}AMBR + CDN\text{-}APN\text{-}AMBR.$$

On FIG. 2, the "mirrored session setup" phase corresponds to these determinations of the different bit-rates.

A message, referred as 13, "Create Session Req" specifies the (local) maximum bit rate, CDN-APN-AMBR to the shadow public data network gateway Sh-PGW. When the two gateways are collocated, this message can be an internal message.

Similarly, the gateway SGW can specify the central maximum bit rate APN-AMBR to the public data network gateway PGW. This specification can be implemented by a "Modify Bearer cmd", as it consists in a modification of an existing bearer, created during the session setup phase. In the depicted example, the modification consists solely in modifying the APN-AMBR parameter of the session.

The invention has been described with reference to preferred embodiments. However, many variations are possible within the scope of the invention.

**Claims**

1. Method for allowing a user equipment (UE) connected to a base station (BS) of a mobile communication network to access contents stored into delivery nodes (DA) of a content delivery network (CDN), comprising the steps of:

   - having said user equipment sending a request (M) for content to said base station (BS);
   - having said base station forwarding said request into a tunnel (T);
   - having a gateway (SGW) intercepting said request inside said tunnel and forwarding it to a nearest delivery node (DA) of said base station (BS);
   - having said delivery node transmitting said content to said gateway as a dataflow (R),
   - having said gateway re-introducing said dataflow into said tunnel and forwarding said dataflow to said user equipment (UE) through said tunnel,

   further comprising a step of having said gateway determining a maximum bit rate, CDN-APN-AMBR, for said dataflow to be transmitted through said tunnel to said user equipment.

2. Method according to the previous claim, wherein said request (M) contains a first IP address and wherein said gateway modifies said request by replacing said first IP address by a second IP address associated with said delivery node (DA) within a destination field.

3. Method according to claim 2, wherein said gateway modifies said dataflow by replacing said second IP address by said first IP address within a source field.

4. Method according to any of the previous claims, wherein said gateway determines said delivery node within a list of delivery nodes to which it is associated, according to a distance criterion.

5. Method according to any of the previous claims, wherein said gateway further determines a central maximum bit rate, APN-AMBR, for traffic incoming through said tunnel (T).

6. Method according to claims 5, wherein said gateway receives an overall maximum bit rate, session -APN-AMBR, and wherein said central maximum bit rate is determined so as session-APN-AMBR=APN-AMBR+CDN-APN-AMBR.

7. Method according to any of the previous claims, wherein said gateway is a signaling gateway of said content delivery network.

8. Computer program product comprising a set of instructions arranged, when executed by processing means, for performing the method according to any of the previous claims.

9. Gateway for allowing a user equipment (UE) connected to a base station (BS) of a mobile communication network to access contents stored into delivery nodes (DA) of a content delivery network (CDN), adapted for:

   - receiving a request for content (M) from said user equipment, forwarded by said base station (BS) into a tunnel (T);
   - intercepting said request inside said tunnel and forwarding it to a nearest delivery node (DA) of said base station (BS);
   - receiving from said delivery node said content as a dataflow (R),

- re-introducing said dataflow into said tunnel and forwarding said dataflow to said user equipment (UE) through said tunnel,

said gateway being further adapted to determine a maximum bit rate CDN-APN-AMBR, or said dataflow to be transmitted through said tunnel to said user equipment.

10. Gateway according to the previous claim, wherein said request (M) contains a first IP address and wherein said gateway is adapted to modify said request by replacing said first IP address by a second IP address associated with said delivery node (DA) within a destination field.

11. Gateway according to claim 10, wherein said gateway is adapted to modify said dataflow by replacing said second IP address by said first IP address within a source field.

12. Gateway according to any of the claims 10 to 12, wherein said gateway is adapted to determine said delivery node within a list of delivery nodes to which it is associated, according to a distance criterion.

13. Gateway according to any of the claims 10 to 13, further adapted to determine a central maximum bit rate, APN-AMBR, for traffic incoming through said tunnel (T).

14. Gateway according to claim 13, further adapted to receive an overall maximum bit rate, session -APN-AMBR, and wherein said central maximum bit rate is determined so as session-APN-AMBR=APN-AMBR+CDN-APN-AMBR.

15. Content delivery network (CDN) comprising at least one gateway according to any of the claims 10 to 14.

**Patentansprüche**

1. Verfahren, um einem Benutzergerät (User Equipment, UE), das mit einer Basisstation (BS) eines mobilen Kommunikationsnetzwerks verbunden ist, den Zugriff auf Inhalte zu gewähren, die in Bereitstellungsknoten (DA) eines Inhaltbereitstellungsnetzwerk (Content Delivery Network, CDN) gespeichert sind, die folgenden Schritte umfassend:

   - das Senden einer Anfrage (M) nach einem Inhalt an besagte Basisstation (BS);
   - das Weiterleiten besagter Anfrage durch besagte Basisstation in einen Tunnel (T),
   - das Abfangen besagter Anfrage in besagtem Tunnel durch ein Gateway (SGW) und ihr Weiterleiten an einen nächstgelegenen Bereitstellungsknoten (DA) besagter Basisstation (BS),
   - das Übermitteln besagen Inhalts an besagtes Gateway als Datenfluss (R) durch besagten Bereitstellungsknoten,
   - das Wiedereinleiten besagten Datenflusses in besagten Tunnel durch das Gateway und das Weiterleiten besagten Datenflusses an besagtes Benutzergerät (UE) durch besagten Tunnel,

   weiterhin einen von besagtem Gateway ausgeführten Schritt des Bestimmens einer maximalen Bitrate CDN-APN-AMBR für besagten Datenfluss umfassend, der durch besagten Tunnel an besagtes Benutzergerät zu übermitteln ist.

2. Verfahren nach dem vorangehenden Anspruch, wobei besagte Anfrage (M) eine erste IP-Adresse enthält und wobei besagtes Gateway besagte Anfrage durch das Ersetzen besagter erster IP-Adresse durch eine zweite IP-Adresse modifiziert, die mit besagten Bereitstellungsknoten (DA) in einem Zielfeld assoziiert ist.

3. Verfahren nach Anspruch 2, wobei besagtes Gateway besagten Datenfluss durch das Ersetzen besagter zweiter IP-Adresse durch besagte erste IP-Adresse in einem Quellfeld modifiziert.

4. Verfahren nach einem jeglichen der vorgenannten Ansprüche, wobei besagtes Gateway besagten Bereitstellungsknoten in einer Liste von Bereitstellungsknoten bestimmt, der er zugeordnet ist, dazu ein Distanzkriterium anwendend.

5. Verfahren nach einem jeglichen der vorgenannten Ansprüche, wobei besagtes Gateway weiterhin eine zentrale maximale Bitrate APN-AMBR für durch besagten Tunnel (T) eingehenden Verkehr bestimmt.

6. Verfahren nach Anspruch 5, wobei besagtes Gateway eine übergeordnete maximale Bitrate session-APN-AMB empfängt und wobei besagte übergeordnete maximale Bitrate folgendermaßen bestimmt wird:

$$\text{session-APN-AMBR=APN-AMBR+CDN-APN-AMBR.}$$

7. Verfahren nach einem jeglichen der vorgenannten Ansprüche, wobei besagtes Gateway ein Signalisierungsgateway besagten Inhaltbereitstellungsnetzwerks ist.

8. Computerprogramm-Produkt, einen Satz von Anweisungen umfassend, die dafür ausgelegt sind, um bei ihrer Ausführung durch Datenverarbeitungsmittel das Verfahren nach einem jeglichen der vorgenannten Ansprüche auszuführen.

9. Gateway, um einem Benutzergerät (User Equipment, UE), das mit einer Basisstation (BS) eines mobilen Kommunikationsnetzwerks verbunden ist, den Zugriff auf Inhalte zu gewähren, die in Bereitstellungsknoten (DA) eines Inhaltbereitstellungsnetzwerk (Content Delivery Network, CDN) gespeichert sind, ausgelegt für:

- den Empfang einer Inhaltsanfrage (M) von besagtem Benutzergerät, weitergeleitet von besagter Basisstation (BS) in einen Tunnel (T);
- das Abfangen besagter Anfrage in besagtem Tunnel und ihr Weiterleiten an einen nächstgelegenen Bereitstellungsknoten (DA) besagter Basisstation (BS),
- das Empfangen besagten Inhalts als Datenfluss (R) von besagtem Bereitstellungsknoten,
- das erneute Einleiten des besagten Datenflusses in besagten Tunnel und die Weiterleitung des besagten Datenflusses durch besagten Tunnel an besagtes Benutzergerät (UE),

wobei besagtes Gateway weiterhin ausgelegt ist für das Bestimmen einer maximalen Bitrate CDN-APN-AMBR für besagten Datenfluss, der durch besagten Tunnel an besagtes Benutzergerät zu übermitteln ist.

10. Gateway nach dem vorangehenden Anspruch, wobei besagte Anfrage (M) eine erste IP-Adresse enthält und wobei besagtes Gateway ausgelegt ist für das Modifizieren besagter Anfrage durch das Ersetzen besagter erster IP-Adresse durch eine zweite IP-Adresse, die mit besagten Bereitstellungsknoten (DA) in einem Zielfeld assoziiert ist.

11. Gateway nach Anspruch 10, wobei besagtes Gateway dafür ausgelegt ist, um besagten Datenfluss durch das Ersetzen besagter zweiter IP-Adresse durch besagte erste IP-Adresse in einem Quellfeld zu modifizieren.

12. Gateway nach einem jeglichen der Ansprüche 10 bis 12, wobei besagtes Gateway ausgelegt ist für das Bestimmen besagten Bereitstellungsknoten in einer Liste von Bereitstellungsknoten, der er zugeordnet ist, dazu ein Distanzkriterium anwendend.

13. Gateway nach einem jeglichen der Ansprüche 10 bis 13, weiterhin dafür ausgelegt, um eine zentrale maximale Bitrate APN-AMBR für den durch besagten Tunnel (T) eingehenden Verkehr zu bestimmen.

14. Gateway nach Anspruch 3, weiterhin ausgelegt für den Empfang einer übergeordneten maximalen Bitrate session-APN-AMB und wobei besagte übergeordnete maximale Bitrate folgendermaßen bestimmt wird:

$$\text{session-APN-AMBR=APN-AMBR+CDN-APN-AMBR.}$$

15. Inhaltbereitstellungsnetzwerk (CDN), mindestens ein Gateway nach einem jeglichen der Ansprüche 10 bis 14 umfassend.

**Revendications**

1. Procédé destiné à permettre à un équipement utilisateur (UE) connecté à une station de base (BS) d'un réseau de communication mobile d'accéder aux contenus stockés dans des noeuds de distribution (DA) d'un réseau de diffusion de contenu (CDN), comprenant les étapes suivantes :

- ledit équipement utilisateur envoie une requête (M) de contenu à ladite station de base (BS) ;
- ladite station de base achemine ladite requête dans un tunnel (T) ;
- une passerelle (SGW) intercepte ladite requête à l'intérieur dudit tunnel et l'achemine vers un noeud de distribution (DA) situé au plus près de ladite station de base (BS) ;
- ledit noeud de distribution transmet ledit contenu à ladite passerelle sous forme de flux de données (R) ;
- ladite passerelle réintroduit ledit flux de données dans ledit tunnel et l'achemine audit équipement utilisateur (UE) à travers ledit tunnel ;

comprenant en outre une étape de détermination par ladite passerelle d'un débit binaire maximal, CDN-APN-AMBR, pour ledit flux de données à transmettre au travers dudit tunnel vers ledit équipement utilisateur.

2. Procédé selon la revendication précédente, dans lequel ladite requête (M) contient une première adresse IP et dans lequel ladite passerelle modifie ladite requête en remplaçant ladite première adresse IP par une deuxième adresse IP associée audit noeud de distribution (DA) dans un champ de destination.

3. Procédé selon la revendication 2, dans lequel ladite passerelle modifie ledit flux de données en remplaçant ladite deuxième adresse IP par ladite première adresse IP dans un champ source.

4. Procédé selon l'une quelconque des revendications précédentes, dans lequel ladite passerelle détermine ledit noeud de distribution dans une liste de noeuds de distribution à laquelle elle est associée, en fonction d'un critère de distance.

5. Procédé selon l'une quelconque des revendications précédentes, dans lequel ladite passerelle détermine en outre un débit binaire maximal central, APN-AMBR, pour le trafic entrant à travers ledit tunnel (T).

6. Procédé selon la revendication 5, dans lequel ladite passerelle reçoit un débit binaire maximal global, session-APN-AMBR, et dans lequel ledit débit binaire maximal central est déterminé de sorte que

$$\text{session-APN-AMBR} = \text{APN-AMBR} + \text{CDN-APN-AMBR}.$$

7. Procédé selon l'une quelconque des revendications précédentes, dans lequel ladite passerelle est une passerelle de signalisation dudit réseau de diffusion de contenu.

8. Produit-programme informatique comprenant un ensemble d'instructions conçues, lorsqu'elles sont exécutées par des moyens de traitement, pour réaliser le procédé selon l'une quelconque des revendications précédentes.

9. Passerelle destinée à permettre à un équipement utilisateur (UE) connecté à une station de base (BS) d'un réseau de communication mobile d'accéder aux contenus stockés dans des noeuds de distribution (DA) d'un réseau de diffusion de contenu (CDN), adaptée pour :

- recevoir une requête de contenu (M) dudit équipement utilisateur, acheminée par ladite station de base (BS) dans un tunnel (T) ;
- intercepter ladite requête à l'intérieur dudit tunnel et l'acheminer vers un noeud de distribution (DA) situé au plus près de ladite station de base (BS) ;
- recevoir dudit noeud de distribution ledit contenu sous forme de flux de données (R) ;
- réintroduire ledit flux de données dans ledit tunnel et l'acheminer audit équipement utilisateur (UE) à travers ledit tunnel,

ladite passerelle étant en outre adaptée pour déterminer un débit binaire maximal, CDN-APN-AMBR, pour ledit flux de données à transmettre à travers ledit tunnel audit équipement utilisateur.

10. Passerelle selon la revendication précédente, dans laquelle ladite requête (M) contient une première adresse IP et dans laquelle ladite passerelle est adaptée pour modifier ladite requête en remplaçant ladite première adresse IP par une deuxième adresse IP associée audit noeud de distribution (DA) dans un champ de destination.

11. Passerelle selon la revendication 10, dans laquelle ladite passerelle est adaptée pour modifier ledit flux de données en remplaçant ladite deuxième adresse IP par ladite première adresse IP dans un champ source.

12. Passerelle selon l'une quelconque des revendications 10 à 12, dans laquelle ladite passerelle est adaptée pour déterminer ledit noeud de distribution dans une liste de noeuds de distribution à laquelle elle est associée, en fonction d'un critère de distance.

13. Passerelle selon l'une quelconque des revendications 10 à 13, adaptée en outre pour déterminer un débit binaire maximal central, APN-AMBR, pour le trafic entrant à travers ledit tunnel (T).

14. Passerelle selon la revendication 3, adaptée en outre pour recevoir un débit binaire maximal global, session-APN-AMBR, et dans laquelle ledit débit binaire maximal central est déterminé de sorte que

$$\text{session-APN-AMBR} = \text{APN-AMBR} + \text{CDN-APN-AMBR}.$$

15. Réseau de diffusion de contenu (CDN) comprenant au moins une passerelle selon l'une quelconque des revendications 10 à 14.

Fig.1

UE       eNB       MME       SGW       PGW

1. Attach Req

2. Authentication

3. Create Session Req

S11-MME-GTPC-teid

4. Create Session Req

S5-SGW-GTPC-teid
S5-SGW-GTPU-teid

7. Ctx setup Req

6. Create Session Rsp

5. Create Session Rsp

Session (default bearer) setup

S1U-SGW-GTPU-teid
UEIP1@

S11-SGW-GTPC-teid
S11-SGW-GTPU-teid
UEIP1@

S5-PGW-GTPC-teid
S5-PGW-GTPU-teid
UEIP1@
Session APN-AMBR

8. RAB setup

9. Attach Complete

10. Ctx setup Rsp

S1U-eNB-GTPU-teid

11. Modify Bearer Req

S1U-eNB-GTPU-teid

Sh PGW

12. Modify Bearer Rsp

13. Create Session Req

S5-SGW-GTPC-teid
S5-SGW-GTPU-teid
UEIP1@
CDN-APN-AMBR

Mirrored session (default bearer) setup

14. Create Session Rsp

S5-ShPGW-GTPC-teid
S5-ShPGW-GTPU-teid
UEIP1@

**CDN-APN-AMBR + APN-AMBR = Session APN-AMBR**

15. Modify Bearer Cmd

APN-AMBR

16. Update Bearer Req

17. Update Bearer Rsp

Fig.2

## REFERENCES CITED IN THE DESCRIPTION

**Patent documents cited in the description**

- US 2013144979 A1